# EUROPEAN PATENT APPLICATION

(11) **EP 2 248 619 A1**
(43) Date of publication of application: **10.11.2010**
(21) Application number: 09179782.9
(22) Date of filing: 16.09.2003
(51) Int. Cl.: B23C 3/02, B23Q 1/54

(54) **An orbital machining apparatus for producing holes and a radial offset mechanism of such an apparatus**

(30) Priority: 16.09.2002 US 410813 P
(62) Divisional of application: 03795544.0
(71) Applicant: Novator AB, 163 55 Spaanga (SE)
(72) Inventor: Linderholm, Dag, 144 21 Rönninge (SE)
(74) Representative: Börlin, Maria

(57) **Abstract**

An orbital machining apparatus for producing a hole and/or a recess in a workpiece by means of a cutting tool, said apparatus comprising:
a first, second and a third actuator (52,60, 58); a radial offset mechanism configured for controlling the radial distance of the center axis of the cutting tool from a principal axis, said radial offset mechanism comprises:
an inner cylindrical body and an outer cylindrical body (64); and
a mechanism for locking the outer and inner cylindrical bodies (64, 62) together after setting a desired eccentricity thereof. The locking mechanism comprises mutually matching tapered surface sections (72, 74) adjacent front end portions of the outer and inner cylindrical bodies (64, 62), and a tightening nut (70) acting on a rear end portion of either one of the cylindrical bodies for clamping the tapered surfaces (72, 74) together to thereby fixate the mutual rotary positions of the cylindrical bodies (62, 64). The invention also relates to a radial offset mechanism of such an apparatus.

## Description

### Background of the invention

### 1. Field of the invention

The invention relates to an orbital machining apparatus for producing holes according to the preamble of claim 1 and a radial offset mechanism according to the preamble of claim 2.

### 2. Description of related art

WO 94/17944 and WO 01/15870 disclose earlier embodiments of devices for fixation of a portable hand tool apparatus to a template for producing holes in a workpiece. These devices comprise a sleeve, which is attached to the template aperture by means of screw joints.

### Summary of the invention

An object of the present invention is to obtain an orbital machining apparatus for producing holes provided with a radial offset mechanism which may be locked in a stabilized position.

An object of the present invention is to obtain an orbital machining apparatus for producing holes provided with a radial offset mechanism which is protected from dust and chips.

The above objects are achieved by an orbital machining apparatus for producing holes according to claim 1 and a radial offset mechanism according to claim 2.

Features and details of the present invention are set forth in the claims and will be disclosed in the following detailed description with reference to the accompanying drawings.

### Brief description of the drawings

Fig. 1 is a longitudinal sectional view of a portable hand tool apparatus attached to a template for making holes in a workpiece;
Fig. 2 is a perspective view of a hand tool apparatus to be attached to a template; and
Fig. 3 is a perspective view of a hand tool apparatus attached to a template.

### Detailed description of a preferred embodiment

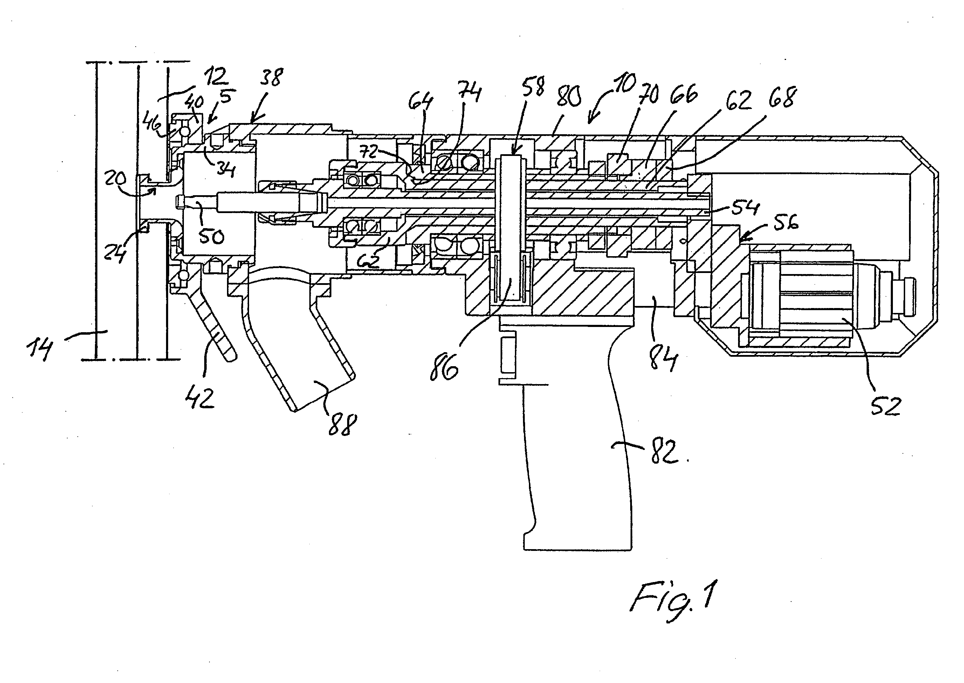

Fig. 1 illustrates a portable hand tool machine 10 for orbital drilling of holes or recesses in a workpiece 14. For temporarily fixating the machine 10 to a template 12 having apertures 16 located at spots where holes are to be formed in the workpiece a fixation device 5 of the present invention is used.

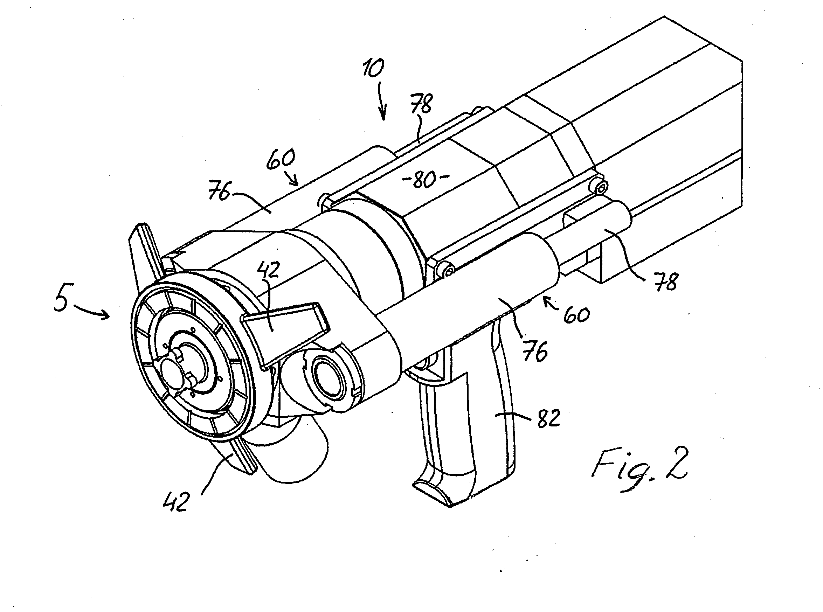

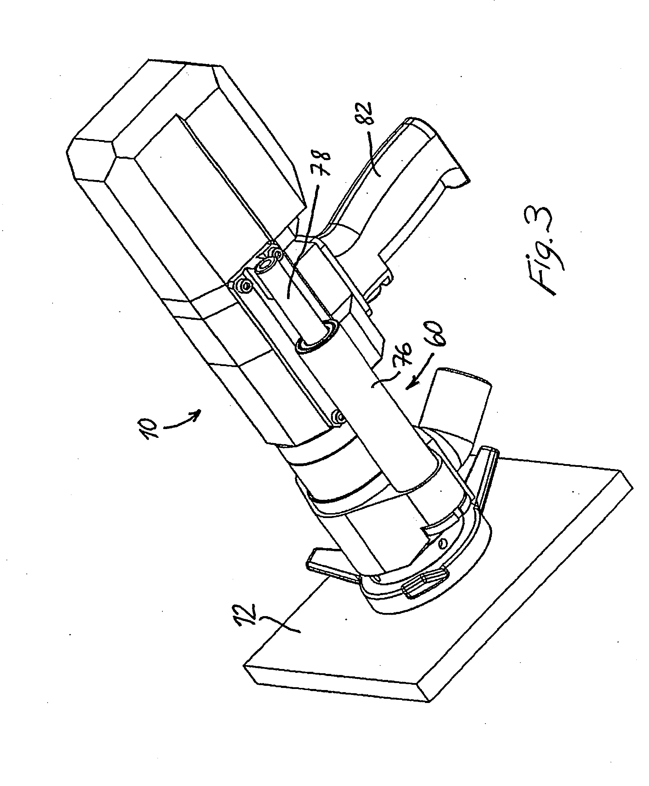

Fig. 2 is a perspective view of a portable orbital drilling machine 10 to which is attached a fixation device 5 of the present invention, and Fig. 3 shows the machine 10 mounted to a template 12. When mounting the machine 10 (or the fixation device 5 separately) to the template 12 for making an accurate hole in the workpiece, a guide sleeve 20 of the fixation device 5 is axially inserted through an aperture in the template and then turned 45° so that lugs 24 will come into a locking engagement with the backside of the template 12. In order to obtain a stable and accurate fixation of the machine 10 to the template 12 a tension ring 40 is turned with help of wings 42 such that a socket 34 will be axially displaced (rearwardly), thereby bringing the lugs 24 of the guide sleeve 20 to axially tighten the template 12 against a pressure plate 46 on the other side thereof. Alternatively, instead of using wings to achieve the axial tightening, a pneumatic assembly can be used.

Fig. 1 further discloses an arrangement of a mechanism for adjusting the radial offset of the longitudinal axis of the cutting tool 50 of the orbital drilling machine 10. The machine 10 comprises a spindle motor 52 for rotating a spindle unit 54, holding the tool 50 at its forward end, about its own center axis via a gear mechanism 56, a radial offset adjustment mechanism (to be described later), an eccentric rotation mechanism 58 for orbiting the cutting tool 50 about a principal axis (corresponding to the center axis of the hole to be formed) and an axial feed mechanism 60 (Figs. 2 and 3).

The radial offset mechanism comprises an inner hollow cylindrical body 62 rotatably supporting the spindle unit 54 therein. The spindle unit 54 is rotatably supported in an eccentric cylindrical hole in the inner cylindrical body 62. The eccentric hole has a longitudinal center axis that is parallel to but radially offset a distance from the longitudinal center axis of the inner cylindrical body 62. The eccentric inner cylindrical body 62 is, in its turn, rotatably supported within an axially extending eccentric hole of a second, outer hollow cylindrical body 64. The eccentric hole has a longitudinal center axis that is parallel to but radially offset a distance from the center axis of the cylindrical body 62 (the principal axis). Preferably, the holes of the cylindrical bodies 62 and 64 have the same eccentricity, i.e. the hole center axes are radially offset the same distance from the respective center axis and of the bodies 62 and 64. By rotating the inner cylindrical body 62 within the eccentric hole of the outer cylindrical body 64, or by a mutual, relative rotation of the cylindrical bodies 62 and 64, it is thus possible to locate the center axis of the eccentric hole of the inner cylindrical body 62 such that it, and hence the spindle unit 54 and the center axis of the cutting tool 50, will coincide with the center axis of the outer cylindrical body 64. By performing a mutual, relative rotation of 180° of the inner and outer cylindrical bodies 62 and 64 away from this zero radial offset position, a maximum offset of the cutting tool axis is obtained.

In order to adjust the mutual rotational position of the inner and outer cylinders 62, 64 to thereby adjust the radial offset of the axis of the spindle unit 54 an adjustment unit is provided at the rear end portion of the inner cylinder 62 so as to be located far away from the tool working area, where dust and chips are generated, which may affect the function of the adjustment unit, and where easy access is allowed to the mechanism. For example, the adjustment unit may have the form of a worm gear mechanism which includes a worm screw (not shown) that is rotatably supported in a block 66 and engagable with a worm wheel (not shown) fitted to the inner cylindrical body 62. A scale 68 indicating the eccentricity of the tool 50, i.e. the diameter value exceeding the fixed diameter of the tool 50 and which generates the finished diameter of the hole to be formed, is located adjacent and rearwardly of the block 66.

The drilling machine 10 further includes an improved mechanism for locking the inner and outer cylindrical bodies 62, 64 together after setting the desired eccentricity thereof. The locking mechanism comprises an axially displaceable nut 70 which engages the block 66 such that a tapered section 72 of the front portion of the inner cylindrical body 62 will be tightened against a matching tapered surface 74 of the front portion of the outer cylindrical body 64. In this manner a stabilized mutual locking of the bodies 62, 64 will be obtained at a short distance from the tool 50.

As best shown in Figs. 2 and 3, the axial feed mechanism 60 may comprise a pair of telescoping linear guide members 76, 78 on opposite sides of the outer housing 80 of the drilling machine 10. The drilling machine 10 may be displaced axially by help of a handle 82 and the guide members 76, 78, or by a pneumatic drive assembly (not shown).

The orbital motion of the tool 50 is carried out by a motor 84 which rotates the outer cylindrical body 64 via a belt transmission 86. An outlet pipe 88 for removing working dust and chips is connectable to a vacuum source.

## Claims

1. An orbital machining apparatus for producing a hole and/or a recess in a workpiece by means of a cutting tool, said apparatus comprising:
a first actuator (52) configured for rotating the cutting tool (50) about its longitudinal center axis during the machining of the hole;
a second actuator (60) configured for moving the cutting tool (50) in an axial feed direction substantially parallel to said tool axis, said second actuator (60) being simultaneously operable with said first actuator (52);
a third actuator (58) configured for rotating the cutting tool (52) about a principal axis, said principal axis being substantially parallel to said center axis of the tool and coaxial with a longitudinal center axis of the hole to be machined, said third actuator (58) being simultaneously operable with said first and second actuators (52, 60);
a radial offset mechanism configured for controlling the radial distance of the center axis of the cutting tool from said principal axis, said radial offset mechanism comprises:
an inner cylindrical body (62) having an eccentric cylindrical hole, said eccentric hole having a longitudinal center axis that is parallel to and radially offset from a longitudinal center axis of said inner body (62), said eccentric hole being configured to radially and rotatably support a spindle unit (54) for operating said cutting tool (50); and
an outer cylindrical body (64) having an eccentric cylindrical hole, said eccentric hole of said outer body (64) having a longitudinal center axis that is parallel to and radially offset from a longitudinal center axis of said outer body, said inner cylindrical body (62) being radially supported in said eccentric hole of the outer cylindrical body (64) and rotatable therein so as to adjust the radial distance of said center axis of the cutting tool (50) from said principal axis; and
a mechanism for locking the outer and inner cylindrical bodies (64, 62) together after setting a desired eccentricity thereof, **characterized in that**
the locking mechanism comprises mutually matching tapered surface sections (72, 74) adjacent front end portions of the outer and inner cylindrical bodies (64, 62),
and a tightening nut (70) acting on a rear end portion of either one of the cylindrical bodies for clamping the tapered surfaces (72, 74) together to thereby fixate the mutual rotary positions of the cylindrical bodies (62, 64).

2. A radial offset mechanism configured for controlling the radial distance of a center axis of a cutting tool of an orbital cutting machine from a principal axis, said radial offset mechanism comprises:
an inner cylindrical body (62) having an eccentric cylindrical hole, said eccentric hole having a longitudinal center axis that is parallel to and radially offset from a longitudinal center axis of said inner body (62), said eccentric hole being configured to radially and rotatably support a spindle unit (54) for operating said cutting tool (50); and
an outer cylindrical body (64) having an eccentric cylindrical hole, said eccentric hole of said outer body (64) having a longitudinal center axis that is parallel to and radially offset from a longitudinal center axis of said outer body, said inner cylindrical body (62) being radially supported in said eccentric hole of the outer cylindrical body (64) and rotatable therein so as to adjust the radial distance of said center axis of the cutting tool (50) from the principal axis; and a mechanism for locking the outer and inner cylindrical bodies (64, 62) together after setting a desired eccentricity thereof, **characterized in that** the locking mechanism comprises mutually matching tapered surface sections (72, 74) adjacent front end portions of the outer and inner cylindrical bodies (64, 62),
and a tightening nut (70) acting on a rear end portion of either one of the cylindrical bodies for clamping the tapered surfaces (72, 74) together to thereby fixate the mutual rotary positions of the cylindrical bodies (62, 64).
